# EUROPEAN PATENT SPECIFICATION

(11) **EP 1 983 217 B1**
(45) Date of publication and mention of the grant of the patent: **20.11.2013**
(21) Application number: 08102963.9
(22) Date of filing: 27.03.2008
(51) Int. Cl.: F16H 3/00, B60K 17/28

(54) **Power take-off assembly**
Kraftübertragungsanordnung
Ensemble de prise de force

(30) Priority: 19.04.2007 US 737168
(43) Date of publication of application: 22.10.2008
(73) Proprietor: Deere & Company, Moline, IL 61265-8098 (US)
(72) Inventor: Steele, David, Waterloo, IA 50701 (US); Weihs, John A, Hudson, IA 50643 (US); Schott, Allan N, Reinbeck, IA 50669 (US); Fox, Daniel J, Elma, IA 50628 (US); Larson, Wade T, Cedar Falls, IA 50613 (US)
(74) Representative: Holst, Sönke

(56) References cited:
- US-A- 3 464 277
- US-A- 4 287 778
- US-A- 4 722 234
- US-A- 5 667 330

## Description

The present invention relates to a Power take-off assembly for installing and removing a two-speed power take off on a work vehicle comprising: a PTO output shaft having a front interior bottom surface, a front end surface with a cutout section, a front interior surface having an interior splined top end portion, and a rear end; an externally splined reversible PTO stub shaft engageable with and secured by the interior splined top end portion and having an extended end, a center and a protruding shoulder attached near the center; a gear collar fixedly mounted on the rear end of the PTO output shaft and axially movable between a high gear speed position and a low gear speed position; a spring loaded mechanism coupled to the gear collar acting as a distal stop to prevent axial movement of the PTO stub shaft; and a recess on the front interior bottom surface of the PTO output shaft for securely seating a snap ring.

Power Take-Off Shafts or PTOs are used on agricultural vehicles such as tractors to provide power from the engine to agricultural implements. As the use of PTOs developed over the years, the industry developed a standard for two speed PTOs comprising gear speeds of 1000 and 540 rpms. Thus in order to accommodate industry standards of a particular implement relative to the appropriate gear speed, it is necessary to provide a power take-off assembly which allows quick and easy installation of a proper PTO stub shaft and its associated speed of operation. As a common feature on most PTO assemblies, the output shaft has an internally splined portion adapted to axially receive the externally splined reversible power take off shaft to prevent relative rotational movement between the power take-off stub shaft and output shaft. The desired PTO shaft speed is typically determined by the configuration of the PTO shaft end inserted into the output shaft. When reversible PTO shafts are used, as in the case of the present invention, the outer end portion is adapted for engagement with the implement for the selected speed, while the configuration of the inner end portion positions a shifting mechanism against the force of a spring loaded mechanism to selectively engage the proper gear speed.

PTO shafts that are described above are often maintained in place by a locking mechanism, typically a flanged locking mechanism, and arranged externally of the output shaft to which the PTO shaft is coupled. One disadvantage of a PTO shaft and current flanged locking mechanisms is that it tends to be tedious and time consuming to install, which may require the use of an additional person or an additional hand.

Other known PTO shafts are maintained in place by an internal snap ring configured to engage an interior portion of the output shaft.

According to the teaching of US 4,722,234 a PTO drive is disclosed comprising such known PTO shaft which is maintained in place by the use of an internal snap ring. The disclosure comprises a PTO drive having a drive sleeve in which a reversible PTO stub shaft can be inserted and secured by a snap-ring. For securing the PTO stub shaft the snap-ring needs to be installed within a circumferential recess on the inner surface of the sleeve.

Because of the high force required to compress the snap-ring for installation, special tools such as pliers are usually required to reverse the PTO shaft end. To perform the installation using a snap ring, an operator must push the PTO stub shaft to overcome the high axial force of the spring loaded shifting mechanism (e.g. spring loaded plunger), and at the same time install the snap ring.

One object of the invention is to provide an improved power take off assembly which overcomes one or more of the above mentioned problems.

According to the object of this invention one or more of the above mentioned problems will be solved by the teaching of claim 1. Further advantageous embodiments of the invention are defined by the subclaims.

A power take off assembly of the above mentioned type comprises a PTO output' shaft having a front interior bottom surface, a front end surface with a cutout section, a front interior surface having an interior splined top end portion, and a rear end. Further it comprise an externally splined reversible PTO stub shaft engageable with and secured by the interior splined top end portion and having an extended end, a center and a protruding shoulder attached near the center. A snap ring is captured by the protruding shoulder and fastened around the PTO stub shaft. A gear collar is fixedly mounted on the rear end of the PTO output shaft and axially movable between a high gear speed position and a low gear speed position, wherein a spring loaded mechanism is coupled to the gear collar acting as a distal stop to prevent axial movement of the PTO stub shaft.

The power take off assembly provides for a quick and secure installation of the PTO stub shaft to the output shaft in a desired orientation without the use of pliers.

In view of the above, and in accordance with one aspect of the present invention, the installation and removal process of the two speed reversible PTO stub shaft is improved by enhancing the stub shaft design to enable the operator to easily insert the stub shaft into the output shaft against a spring loaded mechanism by twisting the shaft to align the gear collar teeth to the appropriate gear.

Furthermore the power take-off shaft can be quickly and easily installed or removed by providing a recess on the front interior top end portion of the output shaft to capture or contain the snap ring which is fastened around the PTO stub shaft. This allows the installer to let go of the tool used to squeeze the snap ring and use both hands to insert the stub shaft against the collar return spring and twist the shaft to align the collar teeth to the gear.

Additionally the end of the stub shaft is extended and comprises protruding shoulders in order to further capture or contain a snap ring.

Furthermore the output shaft design has been modified by providing a cut out section on the front end surface of the output shaft to allow for snap ring tabs clearance. Other advantages, and novel features of the invention will become apparent to those skilled in the art upon examination of the following detailed description of the preferred embodiments of the invention when read in conjunction with the accompanying drawings.

Fig. 1 is a cross-sectional view of a power take-off assembly showing the installation of a reversible power take-off shaft oriented for operation at a speed of 1000 rpm.

Fig. 2 is cross-sectional view of a power take-off assembly showing the installation of the reversible power take-off shaft right before it engages the protruding shoulders.

Fig. 3 is a cross-sectional view of a power take-off assembly showing a fully engaged reversible PTO stub shaft.

Fig. 4 is a cut out view of an output shaft and a stub shaft showing a snap ring securely fastened around its outer surface and a cut out section on the front end surface of the output shaft.

While the present invention is susceptible of embodiments in various forms, there is shown in the drawings and will hereinafter be described a preferred embodiment of the invention with the understanding that the present disclosure is to be considered as setting forth an exemplification of the invention which is not intended to limit the invention to the specific embodiment illustrated.

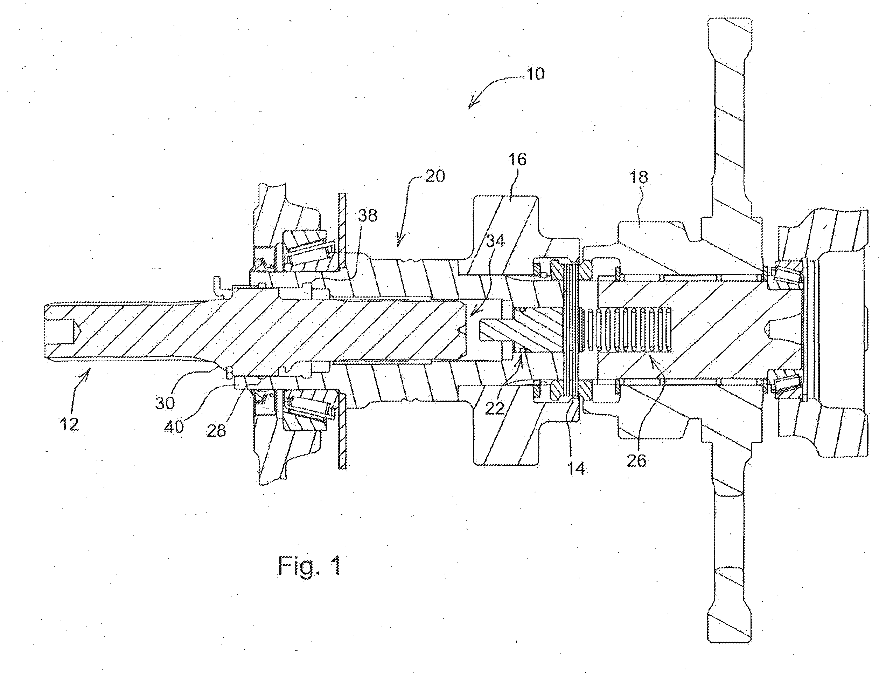

Referring now to the drawings, wherein like reference numerals refer to like parts throughout the several views, there is shown in Fig. 1 a power take-off assembly 10. The power take-off output shaft 20 carries a gear collar 14 which is splined onto the PTO output shaft 20 so that limited axial movement is permitted. The gear collar 14 located between gears 16 and 18 and depending on which particular speed is desired by the work vehicle operator is capable of sliding axially between a high gear speed 18 and a low gear speed 16, respectively 1000 rpm and 540 rpm.

Figs. 1-3 show a snap ring 24 fastened around the outer surface of the stub shaft 12 wherein the snap ring 24 seats within a groove or recess portion 28 along the front interior bottom surface 40 of the PTO output shaft 20. Once the snap ring 24 is aligned and seated within the recess 28, the snap ring becomes locked within the recess and axial movement of the PTO stub shaft is limited.

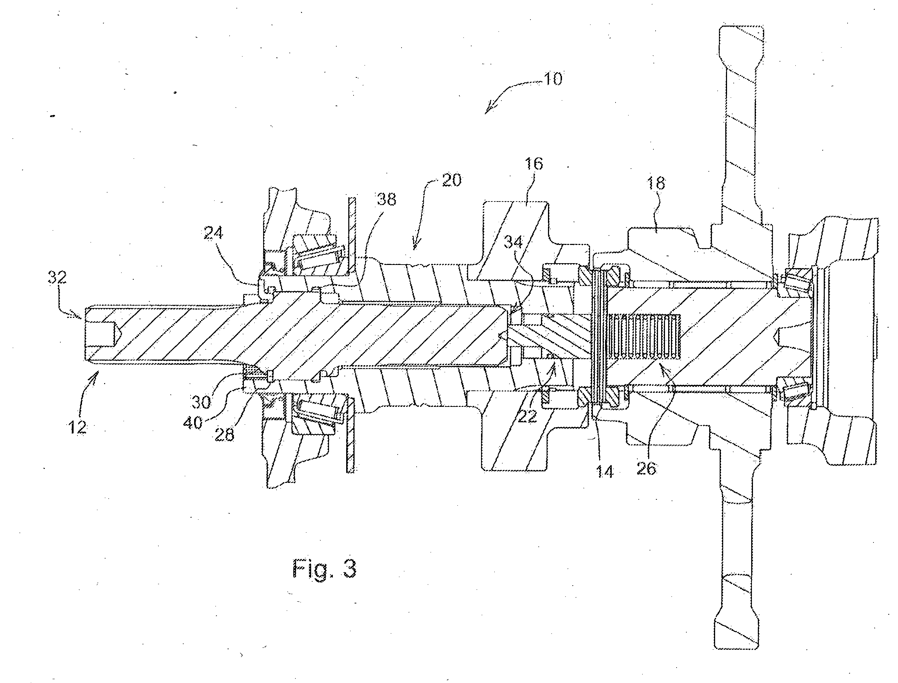

The operation of the foregoing preferred embodiment of the invention will now be described with reference to Figs. 1 and 3. In Fig. 1, the PTO stub shaft 12 having a preferred extended end of 9mm, is shown at an initial installation point wherein the PTO stub shaft 12 is moved axially until the PTO stub shaft 12 locks into the interior splined top end portion 38 of the front interior surface on the output shaft 20. The snap ring 24 fastened around the outer surface of the PTO stub shaft 12 is simultaneously seated within the recess 28 on the front interior bottom surface 40 of the output shaft. The interior splined top end portion 38 of the output shaft prevents the PTO stub shaft 12 from moving axially or in a rightward axial direction while the groove or recess 28 located on the front interior bottom surface 40 of the output shaft 20 prevents the snap ring 24 and the PTO stub shaft 12 from moving axially or in a leftward axial direction. This improved process enables the work vehicle operator or installer to use both hands on the PTO stub shaft 12 to overcome the high force of the spring 26 during installation and force the gear collar 14 proximally or rightward to engage the low gear speed as shown in Fig. 3 to condition the output shaft 20 and the PTO stub shaft 12 for low gear speed operation. As previously mentioned, the PTO stub shaft 12 has a preferred extended end of at least 9mm for better gripping during installation and removal, however, the PTO stub shaft 12 may be extended anywhere between 9 to 20 mm to achieve a similar desired result. The length of the PTO stub shaft 12 is determined by how much gripping area is desired by the operator to ease the PTO stub shaft installation and removal process.

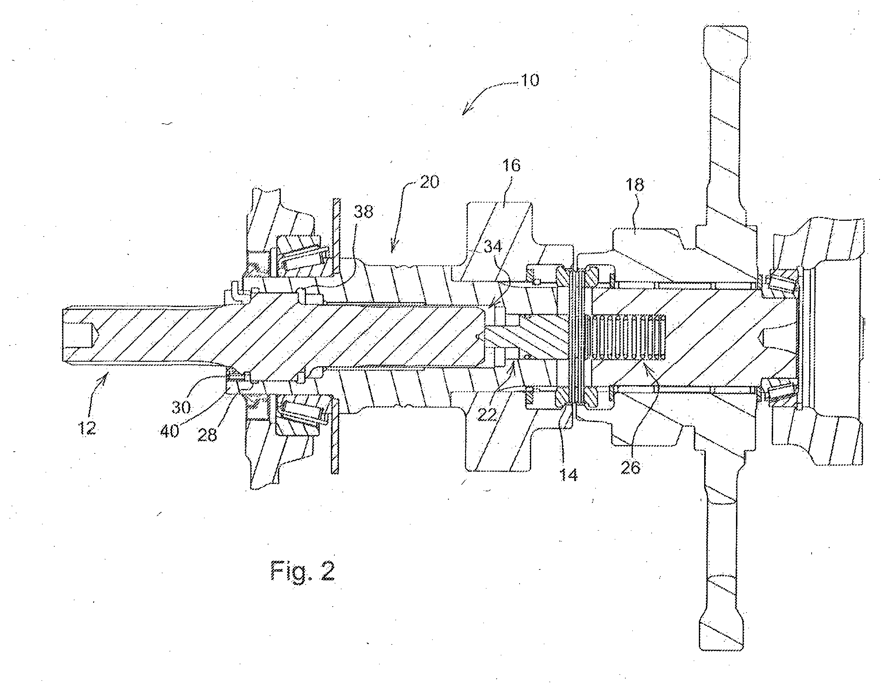

In Fig. 2, the PTO stub shaft 12 is shown at an installation point right before the snap ring 24 engages the protruding shoulder 30 of the PTO stub shaft 12. The protruding shoulder 30 is attached near the center of the PTO stub shaft 12 between the first 32 and second ends 34 and act as a means for limiting the snap ring 24 from moving axially. Further shown in Fig. 2, the PTO stub shaft 12 is moved closer to the recess portion 28 on the interior bottom surface of the PTO output shaft 20 and the snap ring 24 once aligned will seat itself within the recess 28 of the output shaft 20, thereby locking the snap ring 24 and PTO stub shaft 12 in place to prevent axial movement of the PTO stub shaft 12. The recess 28, the interior splined top end portion on the front interior surface 38, and the snap ring 24 captured by the protruding shoulder 30 may be a means for limiting axial movement of the PTO stub shaft 12. Fig. 2 shows the PTO stub shaft 12 engaged with the spring loaded mechanism 22 and this engagement exerts force against the PTO stub shaft 12 in a leftward direction.

Fig. 3 shows the PTO stub shaft 12 in a locked installation position and oriented at 540 rpms. In this locked installation position 28 the PTO stub shaft 12 is firmly seated within the recess portion 28 and the interior splined top end 38 of the output shaft. In this position, the spring loaded mechanism 22 is fully engaged by the PTO stub shaft 12 and the force of the spring 26 is fully exerted in a leftward axial direction. Once this force is exerted, the interior splined top end portion 38 and the recess portion 28 on the output shaft 20 both operate to capture the PTO stub shaft and prevent the PTO stub shaft 12 from moving either in a leftward or rightward direction.

(not shown) If it is desired to change the gear speed by reversing the PTO stub shaft 12, the first end 32 is inserted into the output shaft 20 while the second end 34 is oriented towards the work vehicle. The operator will then compress the snap ring 24 using a tool similar to pliers, and the stub shaft 12 will be removed. When the stub shaft 12 is removed, the spring 26 continues to force the gear collar 14 in a distal or leftward axial direction in the illustrated embodiment, until the gear collar 14 is moved activating the low gear speed.

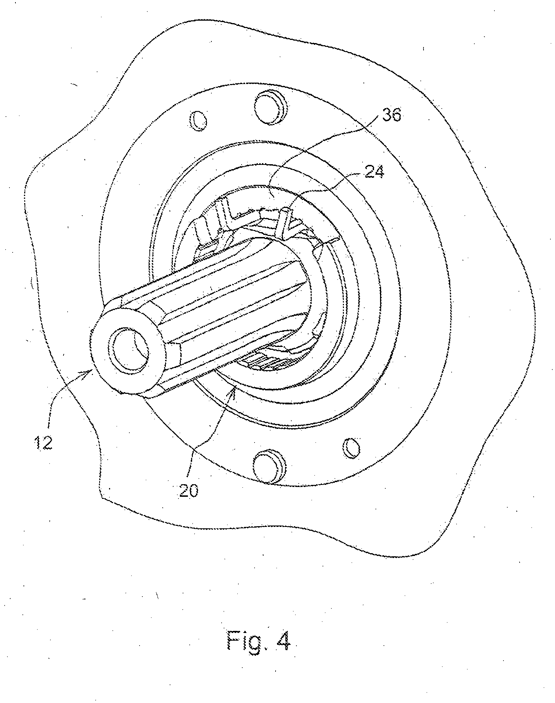

Fig. 4 illustrates a front view of the PTO stub shaft 12 and a snap ring with tabs 24 fastened on the outer surface of the stub shaft. The front end surface of the output shaft 20 is provided with a cut out section 36 to allow for clearance of the snap ring tabs 24 as the PTO stub shaft 12 is installed.

## Claims

1. Power take-off assembly (10) for installing and removing a two-speed power take off on a work vehicle comprising:
a PTO output shaft (20) having a front interior bottom surface (40), a front end surface with a cutout section (36), a front interior surface having an interior splined top end portion (38), and a rear end; an externally splined reversible PTO stub shaft (12) engageable with and secured by the interior splined top end portion (38) and having an extended end (32, 34), a center and a protruding shoulder (30) attached near the center; a gear collar (14) fixedly mounted on the rear end of the PTO output shaft (20) and axially movable between a high gear speed position and a low gear speed position; a spring loaded mechanism (22) coupled to the gear collar (14) acting as a distal stop to prevent axial movement of the PTO stub shaft (12); and a recess (28) on the front interior bottom surface (40) of the PTO output shaft for securely seating a snap ring (24), **characterized in that** the snap ring (24) is captured by the protruding shoulder (30) and fastened around the PTO stub shaft (12), wherein the seating of the snap ring (24) within the recess (28) prevents the PTO stub shaft (12) from moving axially and engaging the spring loaded mechanism (22).

2. Power take-off assembly (10) of claim 1 wherein the protruding shoulder (30) prevents the snap ring (24) and PTO stub shaft (12) from moving axially and engaging the spring loaded mechanism (22).

3. Power take-off assembly (10) of claim 1 or 2, wherein the snap ring (24) has a pair of tabs.

4. Power take-off assembly (10) of claim 3 wherein the cut out section (36) provides clearance for the snap ring tabs during installation and removal.

5. Power take-off assembly (10) of claim 3 or 4 wherein the snap ring tabs provide space to squeeze the snap ring (24) during installation and removal when using a pair of work tools.

6. Power take-off assembly (10) of one of the claims 3 to 5, wherein the snap ring tabs are bent out radially to butt against the PTO stub shaft (12).

7. Power-take-off assembly (10) of one of the claims 1 to 6, wherein the interior splined top end portion (38) on the front interior surface (40) prevents relative rotational movement between the PTO output shaft (20) and the externally splined reversible PTO stub shaft (12).

8. Power take-off assembly (10) of one of the claims 1 to 7, wherein the interior splined top end portion (38) on the front interior surface (40) limits the externally splined reversible PTO stub shaft (12) from moving axially.

## Patentansprüche

1. Zapfwellenanordnung (10) zum Installieren und Entfernen einer Zweigang-Zapfwelle an einem Arbeitsfahrzeug, umfassend:
eine PTO-Abtriebswelle (20) mit einer vorderen, inneren, unteren Fläche (40), einer vorderen Endfläche mit einem Ausschnitt (36), einer vorderen, inneren Fläche mit einem inneren, mit einer Keilverzahnung versehenen oberen Endteil (38) und einem hinteren Ende; einen mit einer äußeren Keilverzahnung versehenen, umdrehbaren PTO-Wellenstumpf (12), der mit dem inneren, mit einer Keilverzahnung versehenen, oberen Endteil (38) in Eingriff gebracht und durch ihn befestigt werden kann und ein verlängertes Ende (32, 34),
eine Mitte und eine nahe der Mitte befestigte vorragende Schulter (30) aufweist; einen Zahnradkragen (14), der fest am hinteren Ende der PTO-Abtriebswelle (20) angebracht und zwischen einer hohen Gangstufenposition und einer niedrigen Gangstufenposition axial beweglich ist; einen federbelasteten Mechanismus (22), der mit dem Zahnradkragen (14) gekoppelt ist und als ein distaler Anschlag zur Verhinderung einer Axialbewegung des PTO-Wellenstumpfes (12) wirkt;
und eine Aussparung (28) an der vorderen, inneren, unteren Fläche (40) der PTO-Abtriebswelle zur festen Anordnung eines Sprengrings (24), **dadurch gekennzeichnet, dass** der Sprengring (24) von der vorragenden Schulter (30) erfasst und um den PTO-Wellenstumpf (12) herum fixiert wird, wobei die Anordnung des Sprengrings (24) in der Aussparung (28) verhindert, dass sich der PTO-Wellenstumpf (12) axial bewegt und den federbelasteten Mechanismus (22) in Eingriff nimmt.

2. Zapfwellenanordnung (10) nach Anspruch 1, wobei die vorragende Schulter (30) verhindert, dass sich der Sprengring (24) und der PTO-Wellenstumpf (12) axial bewegen und den federbelasteten Mechanismus (22) in Eingriff nehmen.

3. Zapfwellenanordnung (10) nach Anspruch 1 oder 2, wobei der Sprengring (24) ein Paar Nasen aufweist.

4. Zapfwellenanordnung (10) nach Anspruch 3, wobei der Ausschnitt (36) einen Freiraum für die Sprengringnasen während des Installierens und Entfernens bereitstellt.

5. Zapfwellenanordnung (10) nach Anspruch 3 oder 4, wobei die Sprengringnasen Raum zum Zusammenquetschen des Sprengrings (24) während des Installierens und Entfernens bei Verwendung eines Arbeitswerkzeugpaars bereitstellen.

6. Zapfwellenanordnung (10) nach einem der Ansprüche 3 bis 5, wobei die Sprengringnasen radial nach außen gebogen sind, um an den PTO-Wellenstumpf (12) anzustoßen.

7. Zapfwellenanordnung (10) nach einem der Ansprüche 1 bis 6, wobei der innere, mit einer Keilverzahnung versehene obere Endteil (38) an der vorderen, inneren Fläche (40) eine relative Drehbewegung zwischen der PTO-Abtriebswelle (20) und dem mit einer äußeren Keilverzahnung versehenen, umdrehbaren PTO-Wellenstumpf (12) verhindert.

8. Zapfwellenanordnung (10) nach einem der Ansprüche 1 bis 7, wobei der innere, mit einer Keilverzahnung versehene, obere Endteil (38) an der vorderen, inneren Fläche (40) eine Axialbewegung des mit einer äußeren Keilverzahnung versehenen, umdrehbaren PTO-Wellenstumpfes (12) begrenzt.

## Revendications

1. Ensemble de prise de force (10) pour installer et retirer une prise de force à deux vitesses sur un véhicule de travail, comprenant :
un arbre de sortie de prise de force (20) ayant une surface inférieure intérieure avant (40), une surface d'extrémité avant pourvue d'une section découpée (36), une surface intérieure avant ayant une portion d'extrémité supérieure cannelée intérieure (38), et une extrémité arrière ; un faux arbre de prise de force réversible cannelé extérieurement (12) pouvant s'engager avec la portion d'extrémité supérieure cannelée intérieure (38) et fixé à cette dernière et ayant une extrémité étendue (32, 34), un centre et un épaulement saillant (30) attaché près du centre ;
un collier de changement de vitesse (14) monté de manière fixe sur l'extrémité arrière de l'arbre de sortie de prise de force (20) et déplaçable axialement entre une position de vitesse élevée et une position de vitesse basse ; un mécanisme chargé par ressort (22) accouplé au collier de changement de vitesse (14) agissant en tant que butée distale pour empêcher un déplacement axial du faux arbre de prise de force (12) ; et un évidement (28) sur la surface inférieure intérieure avant (40) de l'arbre de sortie de prise de force pour loger fixement une bague d'encliquetage (24), **caractérisé en ce que** la bague d'encliquetage (24) est capturée par l'épaulement saillant (30) et fixée autour du faux arbre de prise de force (12), le logement de la bague d'encliquetage (24) à l'intérieur de l'évidement (28) empêchant le faux arbre de prise de force (12) de se déplacer axialement et de s'engager avec le mécanisme chargé par ressort (22).

2. Ensemble de prise de force (10) selon la revendication 1, dans lequel l'épaulement saillant (30) empêche la bague d'encliquetage (24) et le faux arbre de prise de force (12) de se déplacer axialement et de s'engager avec le mécanisme chargé par ressort (22).

3. Ensemble de prise de force (10) selon la revendication 1 ou 2, dans lequel la bague d'encliquetage (24) a une paire de pattes.

4. Ensemble de prise de force (10) selon la revendication 3, dans lequel la section découpée (36) offre un jeu pour les pattes de la bague d'encliquetage pendant l'installation et le retrait.

5. Ensemble de prise de force (10) selon la revendication 3 ou 4, dans lequel les pattes de la bague d'encliquetage offrent de l'espace pour serrer la bague d'encliquetage (24) pendant l'installation et le retrait lorsqu'une paire d'outils de travail est utilisée.

6. Ensemble de prise de force (10) selon l'une quelconque des revendications 3 à 5, dans lequel les pattes de la bague d'encliquetage sont courbées radialement vers l'extérieur pour buter contre l'arbre de sortie de prise de force (12).

7. Ensemble de prise de force (10) selon l'une quelconque des revendications 1 à 6, dans lequel la portion d'extrémité supérieure cannelée intérieure (38) sur la surface intérieure avant (40) empêche un déplacement rotatif relatif entre l'arbre de sortie de prise de force (20) et le faux arbre de prise de force réversible cannelé extérieurement (12).

8. Ensemble de prise de force (10) selon l'une quelconque des revendications 1 à 7, dans lequel la portion d'extrémité supérieure cannelée intérieure (38) sur la surface intérieure avant (40) limite le déplacement axial du faux arbre de prise de force réversible cannelé extérieurement (12).
